# EUROPÄISCHE PATENTSCHRIFT

(11) **EP 3 189 476 B1**
(45) Veröffentlichungstag und Bekanntmachung des Hinweises auf die Patenterteilung: **14.02.2024**
(21) Anmeldenummer: 15745422.4
(22) Anmeldetag: 21.07.2015
(51) Int. Cl.: G07D 7/005, G06V 10/22, G06V 10/75

(54) **VERFAHREN ZUR ERKENNUNG VON MANIPULATIONEN AN EINEM WERT- UND/ODER SICHERHEITSDOKUMENT**
METHOD FOR DETECTING MANIPULATIONS ON A VALUE AND/OR SECURITY DOCUMENT
PROCÉDÉ DE RECONNAISSANCE DE MANIPULATIONS À UN DOCUMENT DE VALEUR ET/OU DE SÉCURITÉ

(30) Priorität: 02.09.2014 DE 102014112610
(43) Veröffentlichungstag der Anmeldung: 12.07.2017
(73) Patentinhaber: Bundesdruckerei GmbH, 10969 Berlin (DE)
(72) Erfinder: GUTMANN, Roland, 14612 Falkensee (DE); WOLF, Andreas, 07743 Jena (DE); KOSIOR, Olga, 12105 Berlin (DE)
(74) Vertreter: Mammel und Maser Patentanwälte PartG mbB
(86) Internationale Anmeldenummer: PCT/EP2015/066654
(87) Internationale Veröffentlichungsnummer: WO 2016/034325

(56) Entgegenhaltungen:
- EP-A1- 2 100 747
- US-A- 5 995 638
- RUDOLF L VAN RENESSE ED - RUDOLF L VAN RENESSE: "Optical Document Security, Screen-Decoded Images", 1. Januar 2005 (2005-01-01), OPTICAL DOCUMENT SECURITY; [ARTECH HOUSE OPTOELECTRONICS LIBRARY], ARTECH HOUSE, BOSTON, MASS. [U.A.], PAGE(S) 146 - 169, XP002554525, ISBN: 978-1-58053-258-7 das ganze Dokument

## Beschreibung

Die Erfindung betrifft ein Verfahren zur Erkennung von Manipulationen an einem Wert- und/oder Sicherheitsdokument, bei welchem das auf dem Wert- und/oder Sicherheitsdokument aufgebrachte Bild aus einer Vielzahl von Bildpunkten besteht und in zumindest einer Zone Zusatzinformationen mit zumindest einem Sicherheitsmerkmal eingebracht sind.

Aus der DE 10 2013 108 423 A1 ist ein Verfahren zum Aufbringen eines Bildes mittels eines Lasergerätes auf einen Datenträger für ein Wert- und/oder Sicherheitsdokument bekannt, bei dem das aufzubringende Bild aus einer Vielzahl von Bildpunkten besteht, denen Grau-, Helligkeits- oder Farbwerte zugeordnet sind. Das Bild umfasst Zusatzinformationen mit zumindest einem Sicherheitsmerkmal, welches in einer Zone in dem aufzubringenden Bild vorgesehen ist. Dieses zumindest eine Sicherheitsmerkmal umfasst ein oder mehrere graphische Laserstrukturen, die von den Bildpunkten zur Erzeugung des aufzubringenden Bildes abweichen. Diese graphischen oder geometrischen Laserstrukturen können eine von den runden Bildpunkten des aufzubringenden Bildes abweichende Geometrie umfassen. Ebenso können intensitätsmodulierte Guillochenstrukturen als auch längenbegrenzte Linien sowie mehrere sich kreuzende Linien und auf den Kreuzungspunkten der Linie oder Linien aufgebrachte Bildpunkte vorgesehen sein. Eine beliebige Kombination hiervon ist auch möglich.

Aus der EP 2 100 747 A1 ist ein Verfahren zum Aufbringen eines Bildpunktes mit eingebetteter Zusatzinformation auf einem Datenträger bekannt. Dieser Datenträger kann in Form einer Datenkarte ausgebildet sein und umfasst ein Portraitfoto des Inhabers. In dem Portraitfoto sind Mikro- oder Zusatzinformationen eingebracht, die mit einer Lupe erkennbar sind. Dabei ist vorgesehen, dass ein oder mehrere Bildpunkte des Portraitbildes in feinere Bildpunkte Pmi unterteilt werden. Jedem unterteilten Mikrobildpunkt Pmi wird ein Grauwert derart zugeordnet, dass der Durchschnitt der Grauwerte der Mikrobildpunkte Pmi gleich dem ursprünglichen Grauwert des Bildpunktes ist.

Die Manipulation von solchen Bildern steigt stetig an, zumal Tischlaseranlagen kostengünstig angeboten werden, durch welche eine Veränderung des aufgebrachten Bildes durch das zusätzliche Einbringen von Laserpunkten vereinfacht und begünstigt wird.

Der Erfindung liegt die Aufgabe zugrunde, ein Verfahren zur automatischen Erkennung von Manipulationen vorzuschlagen, um eine Veränderung von dem zumindest einen in eine Zone des Bildes eingebrachten Sicherheitsmerkmal oder eine Veränderung des zumindest einen in die Zone eingebrachten Sicherheitsmerkmals in einfacher Weise zu erfassen, um insbesondere auch bei Grenzkontrollen mit einem hohen Personenaufkommen eine sichere Prüfung zu ermöglichen.

Diese Aufgabe wird erfindungsgemäß mit einem Verfahren gemäß dem Patentanspruch 1 gelöst. Dabei wird zumindest eine graphische und/oder geometrische Laserstruktur, die optisch erfasst wird, in der zumindest einen Zone im Bild erfasst und mit zumindest einem Sicherheitsmerkmal verglichen, welches beim Herstellen des Datenträgers in das aufzubringende Bild aufgebracht wurde. Durch die Erfassung der zumindest einen graphischen oder geometrischen Laserstruktur in einem Prüfalgorithmus zur Verifikation des Datenträgers, der weitere Sicherheitsmerkmale überwachen kann, wird das manipulationsgefährdete Bild ergänzend über eine optische Mustererkennung und einen Mustervergleich überprüft und auf Manipulationen hin untersucht und ausgewertet.

Eine weitere bevorzugte Ausgestaltung des Verfahrens sieht vor, dass eine Sollposition, eine Ausgestaltung der graphischen oder geometrischen Laserstrukturen oder beides in einem Prüfalgorithmus zur Verifikation der Manipulation integriert wird. Dadurch kann ausgehend von dem Ausgangszustand des aufzubringenden Bildes auf dem Datenträger bei dessen Herstellung das zumindest eine ursprünglich eingebrachte Sicherheitsmerkmal erfasst und als Vergleichsgrundlage für die anschließende Prüfung auf eine mögliche Manipulation durch nachträglich eingebrachte Laserstrukturen herangezogen werden. Dabei kann vorteilhafterweise vorgesehen sein, dass gewisse Sollpositionen und/oder Ausgestaltungen für graphische oder geometrische Laserstrukturen ausgewählt und kombiniert sowie als standardisiertes Prüfkriterium in einem Prüfungsalgorithmus hinterlegt werden. Alternativ kann für jeden Datenträger auch ein personifizierter Prüfalgorithmus hinterlegt sein.

Des Weiteren wird bei der Ausgestaltung von graphischen oder geometrischen Laserstrukturen zur Bildung eines Sicherheitsmerkmals deren Ausrichtung erfasst. Dadurch kann eine zusätzliche tiefergehende Analyse erfolgen.

Des Weiteren können die intensitätsmodulierten Guillochenstrukturen als Laserstruktur überwacht werden. Somit kann auch eine solche mögliche Manipulation erfasst werden.

Des Weiteren wird bevorzugt eine durch längenbegrenzte Linien gebildete Laserstruktur überwacht. Ebenso können eine Überlagerung von Linien und/oder eine Veränderung von Linienstärken und/oder verschiedene Grau-, Helligkeits- oder Farbwerte der Linien überwacht werden.

Des Weiteren kann in einfacher Weise eine Laserstruktur als Sicherheitsmerkmal überwacht werden, bei der mehrere sich kreuzende Linien auf deren Kreuzungspunkten aufgebrachte Bildpunkte aufweisen, wobei bei Manipulationen die aufgebrachten Bildpunkte nicht auf Kreuzungspunkten liegen, so dass dadurch in einfacher Weise eine Verifikation ermöglicht ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht eines Datenträgers mit einem Sicherheitsmerkmal gemäß der Erfindung,
Figur 2a eine Darstellung eines Portraitfotos auf dem Datenträger gemäß Figur 1 mit einem vergrößert dargestellten Sicherheitsmerkmal,
Figur 2b eine schematische Darstellung eines manipulierten Sicherheitsmerkmals gemäß Figur 2a,
Figur 3a eine Darstellung eines Portraitfotos auf dem Datenträger gemäß Figur 1 mit einem vergrößert dargestellten alternativen Sicherheitsmerkmal,
Figur 3b eine schematische Darstellung eines manipulierten Sicherheitsmerkmals gemäß Figur 3a,
Figur 4a eine Darstellung eines Portraitfotos auf dem Datenträger gemäß Figur 1 mit einem vergrößert dargestellten alternativen Sicherheitsmerkmal,
Figur 4b eine schematische Darstellung eines manipulierten Sicherheitsmerkmals gemäß Figur 4a und
Figur 5 eine schematische Ansicht eines Erkennungssystems mit einer Auswerteeinrichtung.

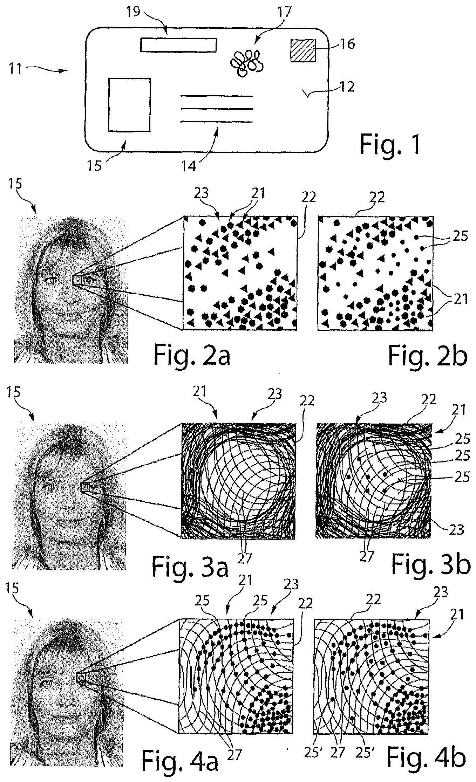

Figur 1 zeigt einen Datenträger 11. Dieser Datenträger 11 kann beispielsweise als Datenkarte, insbesondere als Ausweis- oder Bankkarte, ausgebildet sein. Dieser Datenträger 11 kann auch Teil einer Datenseite für ein buchartiges Dokument sein. Ebenso kann dieser Datenträger 11 Teil von weiteren Wert- oder Sicherheitsdokumenten sein. Der Datenträger 11 weist eine Schicht 12 auf, die beschreibbar und/oder bedruckbar ist. Auf dieser Schicht 12 ist ein Personalisierbereich vorgesehen, in dem beispielsweise der Name 14 des Inhabers sowie sein Bild 15, insbesondere Portraitfoto, aufgebracht oder aufgezeichnet sind. Des Weiteren können auf der Schicht 12 oder in der Schicht 12 Sicherheitsmerkmale 16, wie beispielsweise Kippbilder oder Hologramme, aufgebracht sein und/oder weitere Sicherheitsmerkmale 17, wie beispielsweise eine Guilloschenstruktur, Sicherheitsfäden oder dergleichen. Ergänzend können noch weitere Datenfelder 19 vorgesehen sein, welche eine Firmenkennzeichnung oder die Angabe einer Institution oder dergleichen umfassen können.

In Figur 2a ist schematisch vergrößert das Portraitfoto 15 dargestellt, wie dies mit bloßem Auge zu ersehen ist. Dieses Portraitfoto 15 wird durch das Einbringen von Bildpunkten mittels eines Lasergerätes hergestellt. Die Grau- oder Helligkeitswerte oder Farbwerte dieser Punkte werden bekannterweise mittels einer Steuerung des Lasergerätes eingestellt. Bei einer vergrößerten Betrachtung des Portraitfotos 15 setzt sich das Bild aus einer Vielzahl von einzelnen, runden Laserpunkten als Bildpunkte zusammen.

In dem Portraitfoto 15 ist eine Zusatzinformation mit zumindest einem Sicherheitsmerkmal 21 integriert, welches mit einer optischen Vergrößerungshilfe, wie beispielsweise einer Lupe oder einer Kamera, erkennbar und schematisch vergrößert dargestellt ist. Dieses zumindest eine Sicherheitsmerkmal 21 ist in einer Zone 22 mit einer definierten Größe eingebracht. Bevorzugt ist die Zone 22 in einem Kernbereich des Bildes 15 des Inhabers vorgesehen, wie beispielsweise im Augen-, Nasen- und/oder Mundbereich.

Das innerhalb der Zone 22 eingebrachte Sicherheitsmerkmal 21 umfasst geometrische oder grafische Laserstrukturen 23, welche gemäß dem ersten Ausführungsbeispiel von runden Bildpunkten abweichende Geometrien aufweisen, wie beispielsweise Dreiecke, Sechsecke oder dergleichen, die entsprechend dem Grau- oder Helligkeitsverlauf dem eingebrachten Bereich des eigentlichen Bildes 15 angepasst sind. Dadurch kann in Bereichen innerhalb der Zone 22 eine unterschiedliche Häufigkeit der einzelnen Laserstrukturen 23 auftauchen. Beispielsweise sind gemäß Figur 2a sechseckig- und dreieckförmige Laserstrukturen 23 gemischt zueinander eingebracht. Alternativ kann auch nur eine Laserstruktur 23 eingebracht sein, die jedoch abweichend von runden Bildpunkten ist. Ebenso kann auch eine Mischung aus mehreren geometrisch verschiedenen Laserpunkten zur Bildung der Laserstrukturen 23 vorgesehen sein.

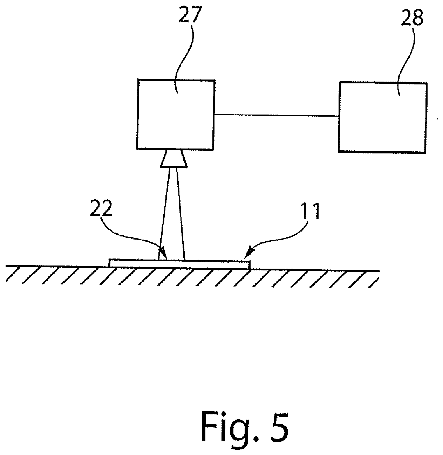

In Figur 2b ist ein manipuliertes Sicherheitsmerkmal 21 dargestellt. Beim Versuch einer Manipulation durch Überschreiben bzw. Überlasern des Bildes 15 erfolgt auch ein Überlasern der Zone 22 mit Zusatzinformationen, um beispielsweise eine Brille in das Portraitbild 15 zu integrieren oder die Augenkontur zu verändern, so dass ergänzend runde Bildpunkte 25 als Laserpunkte, die mit einem üblichen Lasergerät hergestellt wurden, innerhalb der Laserstrukturierung 23 in der Zone 22 zu ersehen sind. Die Manipulation wird optisch durch eine optische Lasereinrichtung erfasst und an eine Auswerteeinrichtung 28 (Figur 5) weitergeleitet, in welcher mit einem Prüfalgorithmus eine Überprüfung durchgeführt wird.

In Figur 3a ist eine alternative Ausführungsform des Sicherheitsmerkmals 21 dargestellt. Die Laserstruktur 23 ist ausschließlich linienförmig ausgebildet. Diese Linien 27 können die gleiche Linienstärke aufweisen. Ebenso kann eine Linie durch Modulierung der Intensität beim Aufbringen in die Zone 22 verändert sein. Insbesondere kann eine intensitätsmodulierte Guilloschenstruktur eingebracht werden. Bevorzugt wird eine solche Ausführungsform für die Zone 22 im Augenbereich, insbesondere im Bereich der Iris, ausgewählt. Aufgrund der Erfassung der einzelnen Laserstrukturen 23 bezüglich der Geometrie kann bereits durch die zusätzliche Erfassung von runden Bildpunkten 25 erkannt werden, dass eine nachträgliche Manipulation vorgenommen wurde. Zusätzlich können bei nichtrunden Laserstrukturen 23 neben der Geometrie auch die Ausrichtung einzelner Spitzen oder Kanten der Geometrie in den Prüfalgorithmus aufgenommen werden, so dass selbst bei dem Einbringen von graphischen oder geometrischen, jedenfalls nicht runden Bildpunkten 25 noch ein Verifikationsmerkmal verbleibt.

Figur 3b zeigt eine Manipulation bei einer Laserstruktur 23 gemäß der Ausführungsform in Figur 3a. Die nachträglich eingebrachten runden Bildpunkte 25 sind ersichtlich und einfach zu verifizieren.

Bei dieser Ausführungsform kann durch eine optische Erfassung der Bildpunkte in einfacher Weise eine Auswertung durch Vergleich des Originalbildes 15 mit dem manipulierten Bild erfolgen. Es kann aber auch bereits die Erkennung von runden Laserpunkten 25 genügen, die sonst in dieser Zone 22 keine Verwendung finden. Zusätzlich kann zumindest die Zone 22 der intensitätsmodulierten Guilloschenstruktur abgespeichert werden, d.h. einzelne Linienverläufe zueinander, so dass das zusätzliche Einbringen oder Überlagern von weiteren Linien bei der Durchführung der automatischen Prüfung durch einen Prüfalgorithmus erfasst wird. Solche Manipulationen sind oft ohne Hilfsmittel nicht mehr ersichtlich und können durch eine optische Erfassungseinrichtung 27 (Figur 5) erfasst werden.

In Figur 4a ist eine weitere alternative Ausführungsform zur Bildung der Laserstruktur 23 dargestellt. Beispielsweise werden sich kreuzende Linien 27 nach Art eines Netzes in die Zone 22 eingebracht. Ergänzend können beispielsweise runde Bildpunkte 25 aufgebracht werden, die den üblich runden Bildpunkten entsprechen, die jedoch gezielt auf Kreuzungspunkte der Linien 27 und/oder auf der Linie 27 aufgebracht werden.

In Figur 4b ist ein manipuliertes Sicherheitsmerkmal 21 gemäß Figur 4a dargestellt. Die Manipulation wird dadurch ersichtlich, dass sich runde Bildpunkte 25 nicht auf Kreuzungspunkten oder nicht auf den Linien 27, sondern dazwischenliegend befinden und somit die Manipulation erkennbar ist.

Das Einbringen der Laserstruktur 23 als Sicherheitsmerkmal 21 wird bevorzugt mit einem Mikrolasermodul hergestellt. Dabei werden bevorzugt runde, eckige oder ringförmige Zonen 22 in den Kernbereichen eines solchen Portraitfotos 15 ausgewählt, wobei wenigstens eine Zone 22 zur Aufnahme von zumindest einem Sicherheitsmerkmal 21 gebildet ist.

Bei den in Figur 4b dargestellten manipulierten Sicherheitsmerkmalen ist wiederum eine einfache Erfassung in der Manipulation ermöglicht, indem diejenigen Punkte erfasst und ausgewertet werden, welche nicht auf der Linie und/oder auf Kreuzungspunkten der Linien 27 liegen.

In Figur 5 ist eine schematische Ansicht eines Erkennungssystems 27 mit einer Auswerteeinrichtung 28 dargestellt, um den Datenträger 11 für eine mögliche Manipulation zu prüfen. Bei dem Erkennungssystem 27 kann es sich um eine optische Einrichtung handeln, welche die Laserstrukturen 23 sowie die Manipulationen, beispielsweise durch die Laserpunkte 25 oder durch zusätzliche Linien, erfasst. Diese erfassten Daten werden an eine Auswerteeinrichtung 28 weitergeleitet, in welcher mittels eines Prüfalgorithmus die Manipulation ermittelt wird. Diese Auswerteeinrichtung 28 kann auch mit einer zentralen Datenverwaltungseinrichtung verbunden sein, in welcher die Originaldaten abgespeichert sind und zum Vergleich mit dem zu prüfenden Datenträger 11 abgefragt werden.

Alternativ zur dargestellten Ausführungsform, bei welcher von oben die Zone 22 auf dem Datenträger 11 abgescannt und erfasst wird, kann der Datenträger auch auf einem Gehäuse mit einem transparenten Fenster aufgelegt werden, wobei im Gehäuse die Erkennungseinrichtung 27 vorgesehen ist.

## Patentansprüche

1. Verfahren zur Erkennung von Manipulationen an einem Wert- und/oder Sicherheitsdokument, bei welchem auf einen Datenträger (11) zumindest ein Bild (15) mittels eines Lasergerätes aufgebracht ist, welches aus einer Vielzahl von runden Laserpunkten als Bildpunkte besteht, denen Grau-, Helligkeits- oder Farbwerte zugeordnet sind, wobei in dem aufzubringenden Bild (15) zumindest eine Zone (22) gebildet ist, welche frei von Bildpunkten des Bildes (15) ist und in die zumindest eine Zone (22) Zusatzinformationen mit zumindest einem Sicherheitsmerkmal (21) eingebracht sind, **dadurch gekennzeichnet, dass** die Zusatzinformationen mit zumindest einem Sicherheitsmerkmal (21) eine oder mehrere graphische oder geometrische Laserstrukturen (23) aufweisen, die von runden Laserpunkten als Bildpunkte des Bildes (15) abweichende Geometrien aufweisen und, dass die zumindest eine graphische oder geometrische Laserstruktur (23) und die Ausrichtung der graphischen oder geometrischen Laserstrukturen (23) in der Zone (22) optisch erfasst und mit dem zumindest einen Sicherheitsmerkmal (21) in einer Auswerteeinrichtung (28) verglichen wird, welches bei dem Aufbringen des Bildes (15) zur Herstellung des Datenträgers (11) in die Zone (22) aufgebracht wurde.

2. Verfahren nach Anspruch 1, **dadurch gekennzeichnet, dass** eine Sollposition und/oder eine Ausgestaltung der graphischen oder geometrischen Laserstrukturen (23) in einem Prüfungsalgorithmus zur Verifikation von Manipulationen in der Auswerteeinrichtung (28) ausgewertet werden.

3. Verfahren nach Anspruch 1, **dadurch gekennzeichnet, dass** eine als Laserstruktur (23) ausgebildete intensitätsmodulierte Guilloschenstruktur erfasst und ausgewertet wird.

4. Verfahren nach Anspruch 1, **dadurch gekennzeichnet, dass** eine als längenbegrenzte Linien ausgebildete Laserstruktur (23) erfasst und ausgewertet wird.

5. Verfahren nach Anspruch 1, **dadurch gekennzeichnet, dass** eine durch eine Überlagerung von Linien und/oder eine Veränderung von einer Linienstärke und/oder verschiedenen Grau-, Helligkeits- oder Farbwerte der Linie gebildete Laserstruktur (23) erfasst und ausgewertet wird.

6. Verfahren nach Anspruch 1, **dadurch gekennzeichnet, dass** eine durch mehrere sich kreuzende Linien und auf den Kreuzungspunkten der Linie und/oder den Linien aufgebrachten Bildpunkte (25) als Laserstruktur (23) erfasst und ausgewertet werden.

7. Verfahren nach Anspruch 1, **dadurch gekennzeichnet, dass** ein optisches Erkennungssystem (27) zur Erfassung des Bildes (15) eingesetzt wird und die erfassten Daten an der Auswerteeinrichtung (28) zum Vergleich mittels eines Prüfalgorithmus basierend auf Daten des Original-Bildes (15) weitergeleitet werden.

## Claims

1. Method for detecting tampering with a document of value and/or security document, in which at least one image (15) is applied to a data carrier (11) by means of a laser device, which image consists of a multiplicity of round laser dots as pixels to which grey, brightness or colour values are assigned, at least one zone (22) being formed in the image (15) to be applied, which zone is free of pixels of the image (15) and additional information with at least one security feature (21) being introduced into the at least one zone (22), **characterized in that** the additional information with at least one security feature (21) has one or more graphic or geometric laser structures (23) which deviate from round laser dots as pixels of the image (15), and that the at least one graphic or geometric laser structure (23) and the alignment of the graphic or geometric laser structures (23) in the zone (22) are optically detected and compared with the at least one security feature (21) in an evaluation device (28), which was applied to the zone (22) when the image (15) was applied to produce the data carrier (11).

2. Method according to claim 1, **characterized in that** a nominal position and/or a configuration of the graphic or geometric laser structures (23) are evaluated in a checking algorithm for verifying manipulations in the evaluation device (28).

3. Method according to claim 1, **characterized in that** an intensity-modulated Guilloche structure formed as a laser structure (23) is detected and evaluated.

4. Method according to claim 1, **characterized in that** the laser structure (23) formed as length-limited lines is detected and evaluated.

5. Method according to claim 1, **characterized in that** a laser structure (23) formed by a superposition of lines and/or a change in a line thickness and/or different grey, brightness or colour values of the line is detected and evaluated.

6. Method according to claim 1, **characterized in that** the pixels (25) formed by a plurality of intersecting lines and applied to the intersection points of the line and/or the lines are detected and evaluated as a laser structure (23) .

7. Method according to claim 1, **characterized in that** an optical detection system (27) is used to detect the image (15) and the detected data is forwarded to the evaluation device (28) for comparison by means of a test algorithm based on data of the original image (15).

## Revendications

1. Procédé de détection de manipulations d'un document de valeur et/ou de sécurité, dans lequel au moins une image (15) est appliquée sur un support de données (11) au moyen d'un appareil laser, laquelle image est constituée d'une pluralité de points laser ronds en tant que points d'image, auxquels sont associées des valeurs de gris, de luminosité ou de couleur, au moins une zone (22) étant formée dans l'image (15) à appliquer, laquelle zone est exempte de points d'image de l'image (15) et des informations supplémentaires avec au moins une caractéristique de sécurité (21) étant introduites dans la au moins une zone (22), **caractérisé en ce que** des informations supplémentaires sont introduites dans la zone (22), que des informations supplémentaires avec au moins une caractéristique de sécurité (21) présentent une ou plusieurs structures laser graphiques ou géométriques (23) qui présentent des géométries différentes des points laser ronds en tant que points d'image de l'image (15) et, **en ce que** l'on détecte optiquement l'au moins une structure laser graphique ou géométrique (23) et l'orientation des structures laser graphiques ou géométriques (23) dans la zone (22) et on les compare, dans un dispositif d'évaluation (28), à l'au moins une caractéristique de sécurité (21) qui a été appliquée dans la zone (22) lors de l'application de l'image (15) pour la fabrication du support de données (11).

2. Procédé selon la revendication 1, **caractérisé en ce qu'**une position de consigne et/ou une configuration des structures laser graphiques ou géométriques (23) sont évaluées dans un algorithme de contrôle pour vérifier les manipulations dans le dispositif d'évaluation (28).

3. Procédé selon la revendication 1, **caractérisé en ce que** la structure de guillochage modulée en intensité réalisée sous forme de structure laser (23) est détectée et évaluée.

4. Procédé selon la revendication 1, **caractérisé en ce que** la structure laser (23) réalisée sous forme de lignes de longueur limitée est saisie et évaluée.

5. Procédé selon la revendication 1, **caractérisé en ce qu'**une structure laser (23) formée par une superposition de lignes et/ou une modification d'une épaisseur de ligne et/ou de différentes valeurs de gris, de luminosité ou de couleur de la ligne est détectée et évaluée.

6. Procédé selon la revendication 1, **caractérisé en ce que** les points d'image (25) appliqués par plusieurs lignes qui se croisent et sur les points de croisement de la ligne et/ou des lignes sont détectés et évalués comme structure laser (23).

7. Procédé selon la revendication 1, **caractérisé en ce qu'**un système de reconnaissance optique (27) est utilisé pour la saisie de l'image (15) et les données saisies sont transmises au dispositif d'évaluation (28) pour la comparaison au moyen d'un algorithme de contrôle basé sur des données de l'image originale (15) .
